(19) Europäisches Patentamt
European Patent Office
Office européen des brevets

(11) **EP 1 892 569 A1**

(12) **EUROPEAN PATENT APPLICATION**
published in accordance with Art. 153(4) EPC

(43) Date of publication:
**27.02.2008 Bulletin 2008/09**

(21) Application number: **06766651.1**

(22) Date of filing: **13.06.2006**

(51) Int Cl.:
*G03B 21/62* (2006.01)   *G02B 5/02* (2006.01)
*G03B 21/10* (2006.01)

(86) International application number:
**PCT/JP2006/311840**

(87) International publication number:
**WO 2006/134920 (21.12.2006 Gazette 2006/51)**

(84) Designated Contracting States:
**DE FR GB**

(30) Priority: **14.06.2005 JP 2005173843**

(71) Applicants:
• **Sony Corporation**
  **Tokyo 141-0001 (JP)**
• **Japan Acryace Corporation**
  **Tokyo 100-0000 (JP)**

(72) Inventors:
• **MURATA, Satoru,**
  **SONY CORPORATION**
  **Tokyo 141-0001 (JP)**
• **IWAKI, Takaaki,**
  **SONY CORPORATION**
  **Tokyo 141-0001 (JP)**

• **NAKANISHI, Yasuaki,**
  **SONY CORPORATION**
  **Tokyo 141-0001 (JP)**
• **KONO, Toshiya,**
  **SONY CORPORATION**
  **Tokyo 141-0001 (JP)**
• **KOKUZAWA, Yukio,**
  **Japan Acryace Corporation**
  **Tokyo 100-0005 (JP)**
• **MURAI, Katsuyuki,**
  **Japan Acryace Corporation**
  **Tokyo 100-0005 (JP)**

(74) Representative: **Keston, Susan Elizabeth**
**D Young & Co**
**120 Holborn**
**London EC1 2DY (GB)**

(54) **TRANSPARENT SCREEN DISPERSION PLATE, TRANSPARENT SCREEN, AND REAR PROJECTION DISPLAY DEVICE**

(57) A transmissive screen includes a diffusing plate 7 having two first diffusing layers 13 and 15, to which diffusing particles are added respectively, arranged with a second diffusing layer 14, to which diffusing particles whose particle size is smaller than that of the first diffusing layers 13 and 15 are added, in between. Accordingly, even in the case where a diameter of a projection pupil of a projection lens that projects light onto the transmissive screen is small, an image glaring when displaying a bright image can be controlled, while minimizing deterioration of gain, resolution and uniformity.

*FIG. 5*

Viewer ⇐     ⇒ Image Light Source

**EP 1 892 569 A1**

**Description**

TECHNICAL FIELD

The present invention relates to a diffusing plate used for diffusing light projected onto a transmissive screen, to a transmissive screen provided with the diffusing plate, and to a rear projection display apparatus.

BACKGROUND ART

A rear projection display apparatus has been widely used as a kind of image display apparatus with a large screen. As is known, using the rear projection display apparatus, image light emitted from an image light source is enlarged with a projection lens to be projected onto a transmissive screen from the rear side, and an image is viewed from the front side of the transmissive screen.

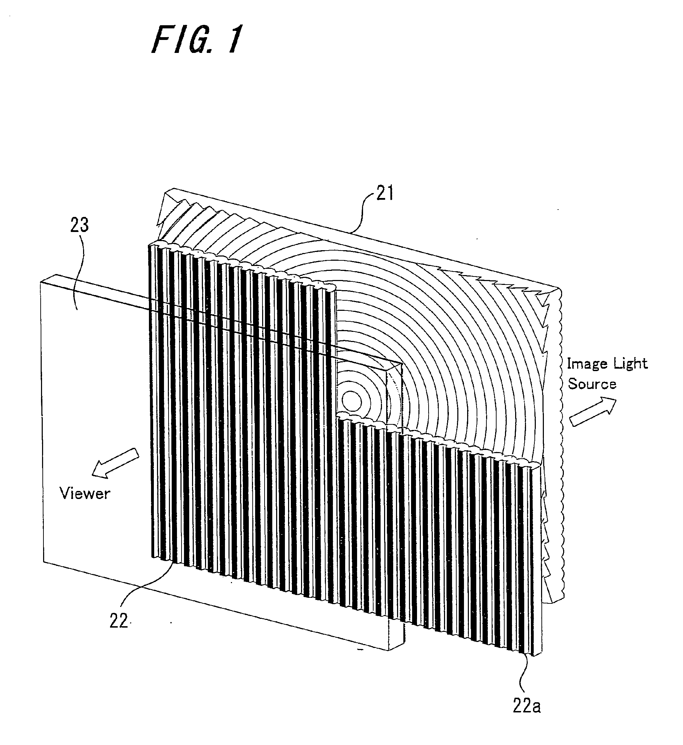

A transmissive screen in a rear projection display apparatus has a structure in which a plurality of screens with materials, structures and optical characteristics different from each other are combined to obtain a suitable viewing angle characteristic, to reduce an influence of external light, and for other purposes. FIG. 1 is a perspective view showing a typical structure of the transmissive screen. A Fresnel screen 21 is arranged on the side facing toward an image light source. A lenticular screen 22 is arranged on a viewer side of the Fresnel screen 21. In addition, a transparent front plate 23 is arranged on the viewer side of the lenticular screen 22 in order to improve a contrast under external light and to protect the screen.

The Fresnel screen 21 has the function of focusing image light projected from an optical projection system (the function of converting the image light into light vertical to the screen surface).

The lenticular screen 22 has the function of deflecting the light focused on the Fresnel screen 21 in the horizontal direction in order to enlarge the viewing angle, and the function of shielding external light by an external light absorption layer (black stripe) 22a provided on the side from which light is emiited.

Further, a diffusing plate (where diffusing particles are added to a base material board made of plastic or the like) is provided to the Fresnel screen 21 or the lenticular screen 22 in order to enlarge the viewing angle in the vertical direction, though not shown in the figure.

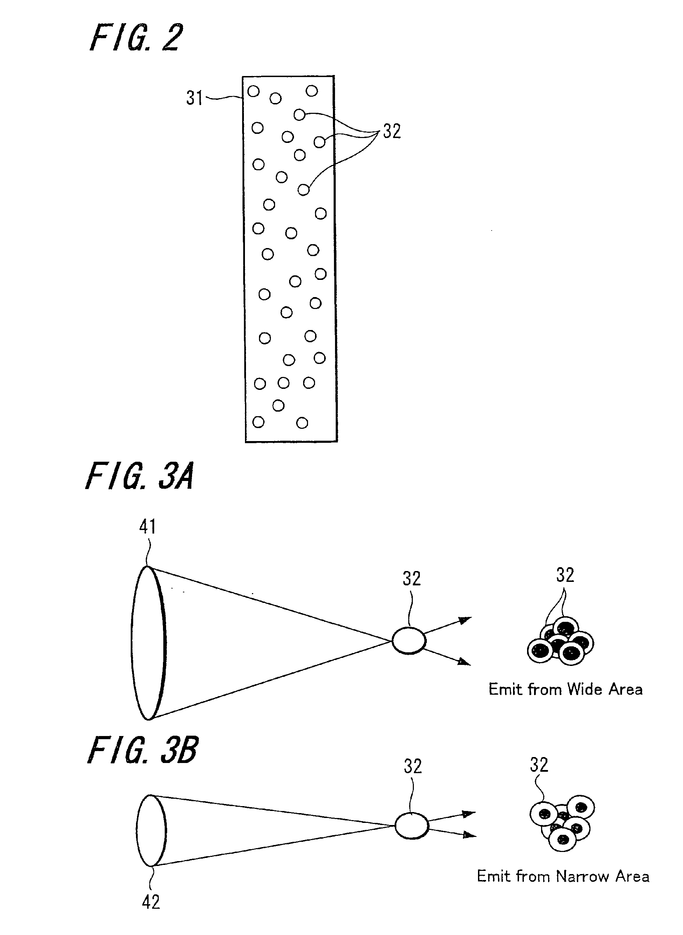

In the past, the diffusing plate provided to the Fresnel screen 21 or the lenticular screen 22 has, as shown in FIG. 2, a single-layer structure in which diffusing particles 32 of the same particle size are added to the whole of a base material 31 (with reference to Non Patent document 1, for example).

Non Patent document 1: Jeffrey A. Shimizu, et al. "Screens for Rear Projection LCD", International Display Workshop (IDW '99) pp.327-330, 1999.

DISCLOSURE OF THE INVENTION

Here, although a CRT was used in the past as an image light source of a rear projection display apparatus, an LCP (Liquid Crystal Panel) and DLP (Digital light Processing) device have been used recently in order to obtain a small-sized apparatus, and for other purposes. Accordingly, a projection lens having a small projection pupil has also been used recently.

With a diameter of the projection pupil of the projection lens being small as described above, an image glaring (minute difference in contrast) called "scintillation" occurs due to a diffusing plate in the transmissive screen, when a bright image is displayed.

FIGS. 3A and 3B are figures showing a principle of the scintillation being generated. As shown in FIG. 3A, in the case where image light is projected from a projection lens 41 with a large diameter of the projection pupil, the image light is emitted to a viewer side from a wide area of the diffusing particle 32 in the diffusing plate, and so the whole of the diffusing particle 32 is brightly seen. On the contrary, as shown in FIG. 3B, in the case where image light is projected from a projection lens 42 with a small diameter of the projection pupil, the image light is emitted to a viewer side only from a narrow area of the diffusing particle 32 in the diffusing plate, and therefore, only a part of the diffusing particle 32 is brightly seen, causing a minute difference in contrast.

As a method of reducing the scintillation, there is considered a method of raising a density of the diffusing particles (by increasing the number of diffusing particles added).

However, a high density of the diffusing particles causes problems of a gain on the screen being lowered to make an image dark, and of a resolution being lowered to make an image blurred.

Further, as another method of reducing the scintillation, there is considered a method of emitting image light from a wide area of the diffusing particle by adding diffusing particles of a small particle size, even if the diameter of the projection pupil of the projection lens is small.

However, since an amount of scattering blue light of a short wavelength increases with the particle size of the diffusing particles being made small, a reddish image may be seen at the front of the screen, thereby causing a problem that a uniformity (uniformity of color) is lowered.

In view of the above, the present invention is made to control the scintillation even in the case where a diameter of the projection pupil of the projection lens projecting light onto a transmissive screen is small in a rear projection display apparatus using an LCP or DPL as an image light source, while minimizing the reduction of gain, resolution and uniformity.

In order to solve the above problem, according to the present invention, there is provided a diffusing plate used to diffuse light projected onto a transmissive screen, characterized by including two first diffusing layers, to which diffusing particles are added respectively, arranged with a second diffusing layer, to which diffusing particles whose particle size is smaller than that of the first diffusing layers, in between.

The diffusing plate for a transmissive screen includes the diffusing plate of a three-layer structure in which two first diffusing layers are arranged with a second diffusing layer in between.

First, light projected onto the screen is incident on the first diffusing layer on the light source side to be diffused, and then the light is incident on the second diffusing layer. Since the diffusing particles whose particle size is smaller than that of the first diffusing layer are added to the second diffusing layer, the light incident on the second diffusing layer is further diffused, and then is incident on the first diffusing layer on the viewer side.

As described above, since light projected onto the screen is diffused with both the first diffusing layer on the light source side and the second diffusing layer, an angle of light incident on the first diffusing layer on the viewer side becomes random. Accordingly, even in the case in which a diameter of the projection pupil of the projection lens projecting light onto the transmissive screen is small, image light is emitted from a wide area of the diffusing particle in the diffusing layer on the viewer side, and therefore the scintillation (glaring of an image when displaying a bright image) is controlled.

Here, differently from the case of light being diffused only by the first diffusing layer, since the light can be diffused sufficiently even if a density of the diffusing particles (diffusing particles of comparatively large particle size) in the first diffusing layer is lowered, deterioration of gain and resolution can be minimized.

Further, differently from the case of light being diffused only by the second diffusing layer, since the light can be diffused sufficiently even if a density of the diffusing particles (diffusing particles of comparatively small particle size) in the second diffusing layer is lowered (made lower than the density of the diffusing particles in the first diffusing layer, for example), deterioration of uniformity can be minimized.

It should be noted that, for example, it is suitable in the above diffusing plate for a transmissive screen to further arrange two diffusing layers, to which diffusing particles whose particle size is smaller than that of the first diffusing layers are added, on the outside of the two first diffusing layers, respectively (to provide a five-layer structure).

Since roughness on the surface of the diffusing plate is improved by making the particle size small in the outermost layer of the diffusing plate as described above, treatment can easily be performed in the case of bonding a film to the diffusing plate or hard-coating the diffusing plate.

Next, according to the present invention, there is provided a transmissive screen characterized by including a diffusing plate having two first diffusing layers, to which diffusing particles are added respectively, arranged with a second diffusing layer, to which diffusing particles whose particle size is smaller than that of the first diffusing layers are added, in between.

The transmissive screen is provided with the aforementioned diffusing plate according to the present invention, and even in the case where a diameter of the projection pupil of the projection lens projecting light onto the transmissive screen is small, scintillation can be controlled while minimizing the reduction of gain, resolution and uniformity.

Next, according to the present invention, there is provided a rear projection display apparatus including an image light source that emits image light, an optical projection system that enlarges the image light and a transmissive screen onto which the image light enlarged by the optical projection system is projected from the rear, characterized in that the transmissive screen is provided with a diffusing plate including two first diffusing layers, to which diffusing particles are added respectively, arranged with a second diffusing layer, to which diffusing particles whose particle size is smaller than that of the first diffusing layers is added, in between.

The rear projection display apparatus uses the transmissive screen including the aforementioned diffusing plate according to the present invention, and even in the case where a diameter of the projection pupil of the optical projection system is small, scintillation can be controlled while minimizing the reduction of gain, resolution and uniformity.

According to the present invention, even in the case where a diameter of the projection pupil of the projection lens that projects light onto a transmissive screen is small in a rear projection display apparatus using an LCP and DLP as an image light source, such effectiveness is obtained, in which scintillation (a glaring image when displaying a bright image) is controlled while minimizing the reduction of gain, resolution and uniformity.

BRIEF DESCRIPTION OF DRAWINGS

[FIG. 1] A perspective view showing a typical structure of a transmissive screen;

[FIG. 2] A view showing a diffusing plate provided to a related-art transmissive screen;

[FIG. 3] Drawings showing a principle of scintillation being generated;

[FIG. 4] A schematic view showing an optical system of a rear projection display apparatus to which the present invention is applied;

[FIG. 5] A side view showing a structure of a lenticular screen in a transmissive screen in FIG. 4;

[FIG. 6] An enlarged view showing a portion of a diffusing plate in FIG. 5; and

[FIG. 7] A table showing measured results of scintillation values and others of the diffusing plate in FIG. 5.

BEST MODE FOR CARRYING OUT THE INVENTION

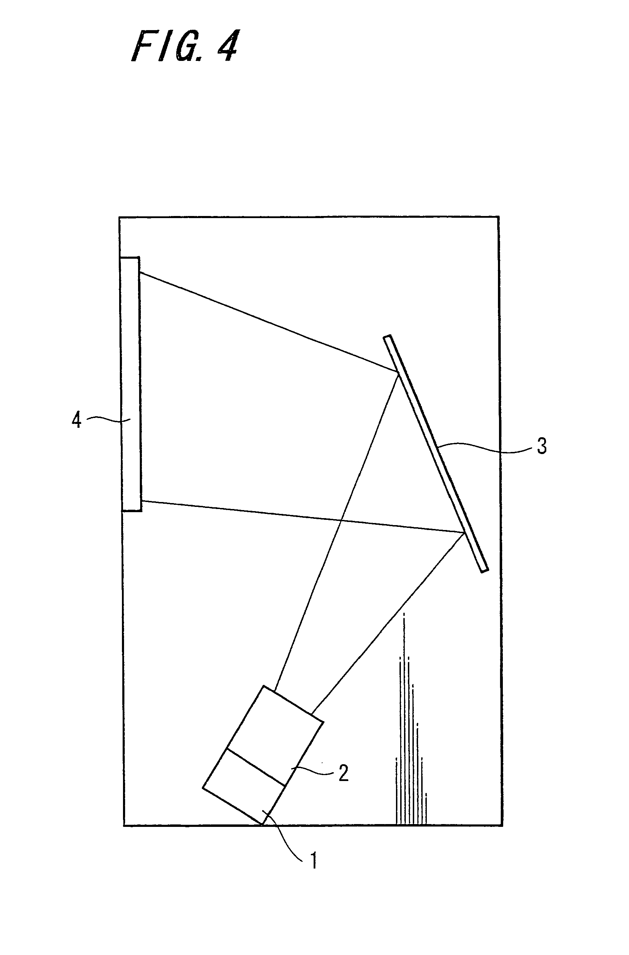

Hereinafter, the present invention is specifically explained with reference to the drawings. FIG. 4 is a schematic view showing an optical system of a rear projection display apparatus to which the present invention is applied. As an image light source 1, for example, an LCP (Liquid Crystal Panel) or DLP (Digital Light Processing) device is used, emitting image light modulated from illumination light from a discharge lamp in accordance with a video signal.

Image light emitted from the image light source 1 is enlarged in an optical projection system 2, then, is reflected from a reflective mirror 3, and is projected onto a transmissive screen 4 from the rear.

As shown in FIG. 1, basically, the transmissive screen 4 has a structure in which: a Fresnel screen is arranged on the side facing toward the image light source; a lenticular screen is arranged on the viewer side of the Fresnel screen; and further a transparent front plate is arranged on the viewer side of the lenticular screen in order to improve contrast under external light and to protect the screen.

The Fresnel screen has the function of focusing image light projected from the optical projection system (converting the image light into the light vertical to the screen surface).

The lenticular screen has the function of deflecting the light focused by means of the Fresnel screen in the horizontal direction in order to enlarge a viewing angle, and has the function of shielding external light by means of an external light absorption layer (black stripe) provided on the side from which light is emitted.

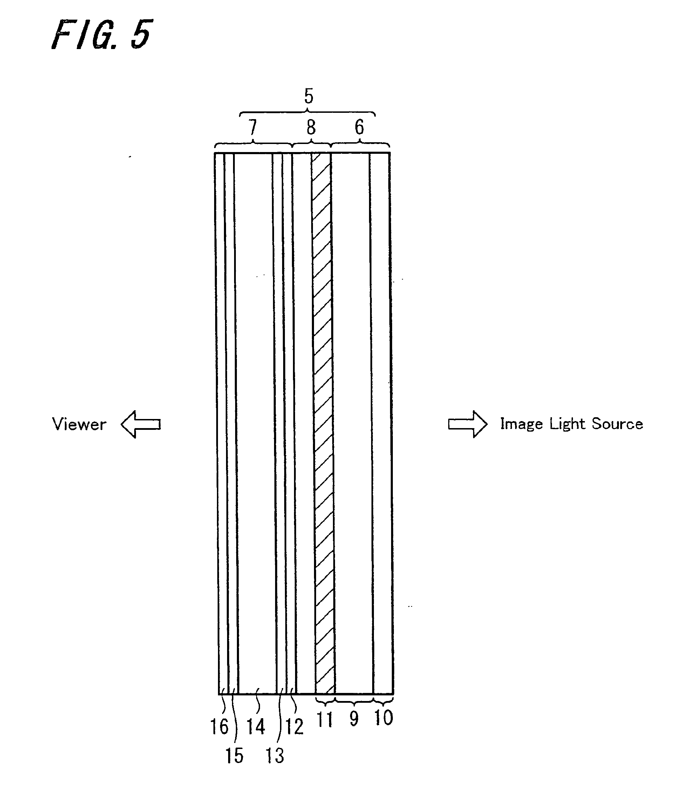

As a characteristic of the present invention, the lenticular screen in the transmissive screen 4 includes a diffusing plate of a five-layer structure. FIG. 5 is a side view showing the structure of the lenticular screen in the transmissive screen 4. The lenticular screen 5 includes a horizontal lenticular lens sheet 6 and a diffusing plate 7 which are bonded by adhesive 8 such that the horizontal lenticular lens sheet 6 is arranged on the side of the image light source 1 in FIG. 4.

The horizontal lenticular lens sheet 6 includes a horizontal lenticular lens 10 formed on the surface of a base material sheet 9, facing toward the image light source 1. A black stripe (BS) 11 extending in the vertical direction (in the lengthwise direction of the figure) is also provided in the adhesive 8.

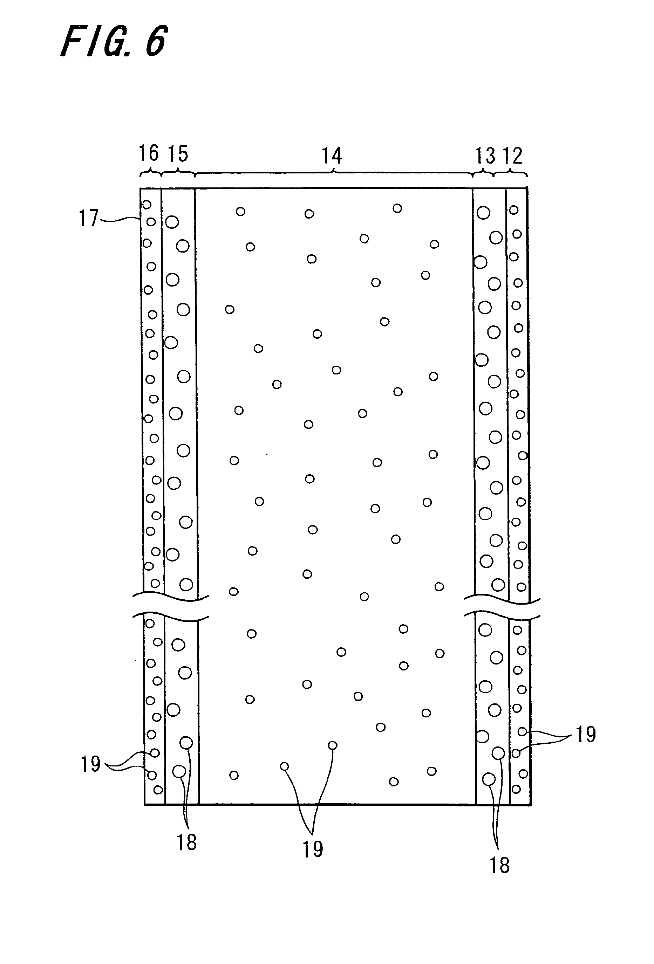

The diffusing plate 7 has a five-layer structure in which diffusing layers 12, 13, 14, 15 and 16 are arranged in this order from the side of the image light source 1. FIG. 6 is an enlarged view showing a portion of the diffusing plate 7. In the diffusing plate 7, two kinds of diffusing particles 18 and 19 are alternately added to a base material 17 made of an acrylic resin plate (the diffusing particles 19 are added to the diffusing layers 12, 14 and 16, and the diffusing particles 18 are added to the diffusing layers 13 and 15).

Particle size of the diffusing particles 19 is smaller than that of the diffusing particles 18. The diffusing layers 12, 14 and 16 have the same density (the number per unit volume) regarding the diffusing particles 19, and the diffusing layers 13 and 15 have the same density regarding the diffusing particles 18.

Assuming that a refractive index of the base material 17 is N; a refractive index of the diffusing particles 18 is Na; and a refractive index of the diffusing particles 19 is $Nb$, the refractive indexes $N$, $Na$ and $Nb$ have the relationship represented as follows:

$$Na - N = 0.05, \quad Nb - N = 0.05$$

The diffusing particles 18 and 19 may be particles of inorganic materials (glass), or may be particles of organic materials (acrylic or the like).

The total thickness of the base material 17 is 1850$\mu$m, and thicknesses of the diffusing layers 12, 13, 14, 15 and 16 are 80$\mu$m, 180$\mu$m, 1330$\mu$m, 180$\mu$m and 80$\mu$m, respectively.

Among the diffusing layers 12 to 16 constituting the diffusing plate 7, the diffusing layers 12 and 16 at both ends have a function different from that of the three inside diffusing layers 13, 14 and 15.

The diffusing layers 13 to 15 have a function of controlling the scintillation. More specially, first, light projected onto the transmissive screen 4 in FIG. 4 is diffused by the diffusing layer 13 on the side of the image light source 1, and then, the light is incident on the diffusing layer 14. Since the diffusing particles 19 whose particle size is smaller than that of the diffusing layer 13 are added to the diffusing layer 14, the light incident on the diffusing layer 14 is further diffused to be incident on the diffusing layer 15 toward a viewer side.

With the light projected onto the transmissive screen 4 being diffused by both the diffusing layer 13 and diffusing layer 14 as described above, an angle of the light incident on the diffusing layer 15 becomes random. Hence, even in the case in which a diameter of the projection pupil of the projection lens inside the optical projection system 2 in FIG. 4 is small, image light is emitted from a wide area of the diffusing particles 18 in the diffusing layer 15, and therefore the scintillation (an image glaring when displaying a bright image) is controlled.

Then, differently from the case in which light is diffused only by the diffusing layer 13, since the light can be diffused sufficiently even if the density of the diffusing particles 18 (diffusing particles of comparatively large particle size) in the diffusing layer 13 is lowered, the deterioration of gain and resolution can be minimized.

Further, differently from the case in which light is diffused only by the diffusing layer 14, since the light can be diffused sufficiently even if the density of the diffusing particles 19 (diffusing particles of comparatively small particle size) in the diffusing layer 14 is lowered (if the density is lower than that of the diffusing particles 18 in the diffusing layer 13, for example), the deterioration of uniformity can be minimized.

Further, diffusing particles having a smaller particle size are typically more expensive, and therefore costs may also be reduced by alternately adding the diffusing particles 19 of a small particle size and the diffusing particles 18 of a large particle size instead of adding only the diffusing particles 19 of a small particle size.

On the other hand, the diffusing layers 12 and 16 have the function of reducing roughness on a surface of the diffusing plate 7 by making the particle size small in the outermost layer of the diffusing plate 7. Accordingly, treatment can easily be performed in the case of bonding a film to the diffusing plate 7 and hard-coating the diffusing plate 7.

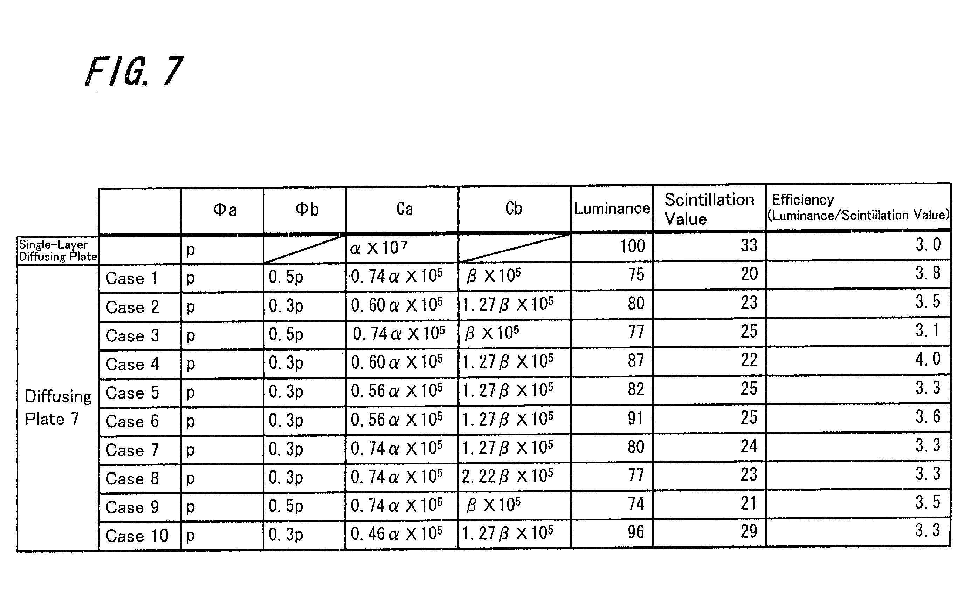

FIG. 7 is a table showing measured results of the luminance, scintillation value, and efficiency (luminance/scintillation value) of the diffusing plate 7, in the case where a particle size $\Phi a$ and density $Ca$ (the number per 1 mm$^3$) of the diffusing particles 18, and a particle size $\Phi b$ and density $Cb$ of the diffusing particles 19 are set to several kinds, as compared with measured results regarding a diffusing plate of a single-layer structure as shown in FIG. 2 (where the thickness thereof is 1850$\mu$m similar to that of the diffusing plate 7 and only diffusing particles 18 are added thereto).

In the table, $p$ in the columns of particle sizes $\Phi a$ and $\Phi b$ is a value within the range from 20$\mu$m to 2$\mu$m, and a value $\alpha$ in the column of density $Ca$ is 3.0, and a value in the column of density $Cb$ is 0.97.

As a method of measuring the scintillation, such method that the ratio of a maximum luminance value to an average luminance value is obtained in a certain area on the surface of the transmissive screen 4 as a scintillation value, is employed.

As shown in the uppermost row in FIG. 7, regarding the diffusing plate of a single-layer structure, in the case of particle size $\Phi a$ being set to $p$ and density $Ca$ being set to $\alpha \times 10^7$, luminance is 100, scintillation value is 33 and efficiency is 3.0.

On the other hand, regarding the diffusing plate 7, as shown in the second row of "Case 1" from the top in FIG. 7, in the case of particle size $\Phi a$ being set to p, particle size $\Phi b$ being set to 0.5$p$, density $Ca$ being set to $0.74\alpha \times 10^5$ and density $Cb$ being set to $\beta \times 10^5$, luminance is 75, scintillation value is 20 and efficiency is 3.8. More specially, although the density $Ca$ is 1/100 or less than that of the diffusing plate of a single-layer structure (the density $Cb$ is further lower than the density $Ca$), the scintillation is controlled as compared to the diffusing plate of a single-layer structure. In addition, the luminance is lower than that of the diffusing plate of a single-layer structure, however, the efficiency is higher than that of the diffusing plate of a single-layer structure. This result indicates that the scintillation is controlled more efficiently by the diffusing plate 7 than by the diffusing plate of a single-layer structure.

In each of the cases in the third row from the top and lower rows than that in FIG. 7, similarly, the density $Ca$ is low (the density $Cb$ is further low), however, the scintillation is controlled efficiently.

It should be noted that, in the above embodiment, the relationship among the refractive index $N$ of the base material 17, the refractive index $Na$ of the diffusing particles 18 and the refractive index $Nb$ of the diffusing particles 19 are represented as $Na - N = 0.05$, $Nb - N = 0.05$, and the particle size $\Phi a$ of the diffusing particles 18, the density $Ca$, the particle size $\Phi b$ of the diffusing particles 19 and the density $Cb$ are selected as shown in each case of FIG. 7; however, further in general, it is desirable that the refractive indexes $N$, $Na$ and $Nb$, particle sizes $\Phi a$ and $\Phi b$ and densities $Ca$ and $Cb$ are selected to satisfy the following conditions:

$$0 < |N - Na| \leq 0.05, \quad 0 < |N - Nb| \leq 0.05$$

$$2\mu m \leq \Phi a \leq 20\mu m$$

$$\Phi b \;<\; \Phi a$$

$$Cb \;\leq\; Ca$$

Further, in the above embodiment, the diffusing plate 7 has a five-layer structure, however, the diffusing layer 7 may have a seven-layer structure by arranging diffusing layers, to which the diffusing particles 18 are added, on the outside of the diffusing layers 12 and 16, for example.

Furthermore, in the above embodiment, the diffusing particles 18 of the same particle size $\Phi a$ are added to the diffusing layers 13 and 15 with the same density $Ca$, however, the diffusing layer 13 may have a different density from that of the diffusing layer 15, and the size of the diffusing particles added to the diffusing layer 13 may be different from that of the particles added to the diffusing layer 15 (but, both the particle sizes are larger than that of the diffusing particles 19).

Similarly, the density of the diffusing layer 14 may be different from that of the diffusing layers 12 and 16, and the diffusing particles of different particle size may be added thereto (but, each particle size is smaller than that of the diffusing particles 18).

Moreover, in the above embodiment, the diffusing plate 7 is provided to the lenticular screen, however, the diffusing plate 7 may be provided to the Fresnel screen.

DESCRIPTION OF REFERENCE NUMERALS

1 IMAGE LIGHT SOURCE, 2 OPTICAL PROJECTION SYSTEM, 3 REFLECTIVE MIRROR, 4 TRANSMISSIVE SCREEN, 5 LENTICULAR SCREEN, 7 DIFFUSING PLATE, 12, 13, 14, 15, 16 DIFFUSING LAYER, 17 BASE MATERIAL, 18, 19 DIFFUSING PARTICLES

**Claims**

1. A diffusing plate for a transmissive screen, which is used to diffuse light projected onto the transmissive screen, **characterized by** comprising:

   two first diffusing layers, to which diffusing particles are added respectively, arranged with a second diffusing layer, to which diffusing particles whose particle size is smaller than that of said first diffusing layers are added, in between.

2. A diffusing plate for a transmissive screen according to claim 1, wherein a density of the diffusing particles in said second diffusing layer is equal to or less than the density of the diffusing particles in said first diffusing layers.

3. A diffusing plate for a transmissive screen according to claim 1, wherein further two diffusing layers, to which diffusing particles whose particle size is smaller than that of said first diffusing layers are added, are arranged on the outside of said two first diffusing layers.

4. A transmissive screen, **characterized by** comprising:

   a diffusing plate including two first diffusing layers, to which diffusing particles are added respectively, arranged with a second diffusing layer, to which diffusing particles whose particle size is smaller than that of said first diffusing layers are added, in between.

5. A transmissive screen according to claim 4, wherein a density of the diffusing particles in said second diffusing layer is equal to or less than the density of the diffusing particles in said first diffusing layers.

6. A transmissive screen according to claim 4, wherein said diffusing plate further includes two diffusing layers, to which the diffusing particles whose particle size is smaller than that of said first diffusing layers are added, on the outside of said two first diffusing layers.

7. A rear projection display apparatus, including
an image light source that emits image light;
an optical projection system that enlarges said image light; and
a transmissive screen onto which the image light enlarged by said optical projection system is projected from the rear, **characterized in that**
said transmissive screen includes a diffusing plate having two first diffusing layers, to which diffusing particles are added respectively, arranged with a second diffusing layer, to which diffusing particles whose particle size is smaller than that of said first diffusing layers are added, in between.

## FIG. 1

## FIG. 2

## FIG. 3A

Emit from Wide Area

## FIG. 3B

Emit from Narrow Area

# FIG. 4

FIG. 5

5

7    8    6

Viewer ⇐    ⇒ Image Light Source

16  14  12  11  9  10
  15   13

# FIG. 6

# FIG. 7

| | | $\Phi a$ | $\Phi b$ | Ca | Cb | Luminance | Scintillation Value | Efficiency (Luminance/Scintillation Value) |
|---|---|---|---|---|---|---|---|---|
| Single-Layer Diffusing Plate | | p | | $\alpha \times 10^7$ | | 100 | 33 | 3.0 |
| Diffusing Plate 7 | Case 1 | p | 0.5p | $0.74\alpha \times 10^5$ | $\beta \times 10^5$ | 75 | 20 | 3.8 |
| | Case 2 | p | 0.3p | $0.60\alpha \times 10^5$ | $1.27\beta \times 10^5$ | 80 | 23 | 3.5 |
| | Case 3 | p | 0.5p | $0.74\alpha \times 10^5$ | $\beta \times 10^5$ | 77 | 25 | 3.1 |
| | Case 4 | p | 0.3p | $0.60\alpha \times 10^5$ | $1.27\beta \times 10^5$ | 87 | 22 | 4.0 |
| | Case 5 | p | 0.3p | $0.56\alpha \times 10^5$ | $1.27\beta \times 10^5$ | 82 | 25 | 3.3 |
| | Case 6 | p | 0.3p | $0.56\alpha \times 10^5$ | $1.27\beta \times 10^5$ | 91 | 25 | 3.6 |
| | Case 7 | p | 0.3p | $0.74\alpha \times 10^5$ | $1.27\beta \times 10^5$ | 80 | 24 | 3.3 |
| | Case 8 | p | 0.3p | $0.74\alpha \times 10^5$ | $2.22\beta \times 10^5$ | 77 | 23 | 3.3 |
| | Case 9 | p | 0.5p | $0.74\alpha \times 10^5$ | $\beta \times 10^5$ | 74 | 21 | 3.5 |
| | Case 10 | p | 0.3p | $0.46\alpha \times 10^5$ | $1.27\beta \times 10^5$ | 96 | 29 | 3.3 |

EP 1 892 569 A1

<table>
<tr><td colspan="2" align="center">**INTERNATIONAL SEARCH REPORT**</td><td>International application No.<br>PCT/JP2006/311840</td></tr>
</table>

A. CLASSIFICATION OF SUBJECT MATTER
*G03B21/62*(2006.01), *G02B5/02*(2006.01), *G03B21/10*(2006.01)

According to International Patent Classification (IPC) or to both national classification and IPC

B. FIELDS SEARCHED

Minimum documentation searched (classification system followed by classification symbols)
G03B21/132, 21/56-21/64, G02B5/02, G03B21/10

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-313865 A  (Kuraray Co., Ltd.),<br>29 November, 1996 (29.11.96),<br>Par. Nos. [0010], [0017], [0020]; Figs.<br>1(g), (h)<br>& US 5675435 A          & EP 0732615 A1 | 1-7 |
| A | JP 10-48751 A  (Mitsui Toatsu Chemicals, Inc.),<br>20 February, 1998 (20.02.98),<br>Par. No. [0019]<br>(Family: none) | 1-7 |
| A | JP 55-12980 A  (Canon Inc.),<br>29 January, 1980 (29.01.80),<br>Page 4, upper right column, lines 2 to 7<br>(Family: none) | 1-7 |

☒  Further documents are listed in the continuation of Box C.      ☐  See patent family annex.

| | |
|---|---|
| * Special categories of cited documents:<br>"A" document defining the general state of the art which is not considered  to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 July, 2006 (07.07.06) | Date of mailing of the international search report<br>18 July, 2006 (18.07.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/311840 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2004-94207 A  (Dainippon Printing Co., Ltd.), 25 March, 2004 (25.03.04), Par. Nos. [0048], [0055], [0072] & US 6271965 B1          & EP 0859270 A1 | 1-7 |
| A | JP 2003-131326 A  (Toppan Printing Co., Ltd.), 09 May, 2003 (09.05.03), Par. Nos. [0017], [0032] (Family: none) | 1-7 |
| A | JP 2000-275742 A  (Mitsubishi Rayon Co., Ltd.), 06 October, 2000 (06.10.00), Par. Nos. [0065], [0066], [0068]; Fig. 1 & US 6556347 B1          & EP 1152286 A1 | 1-7 |
| A | JP 2004-271923 A  (Hitachi, Ltd.), 30 September, 2004 (30.09.04), Par. No. [0016] (Family: none) | 1-7 |
| A | JP 2004-341446 A  (Nitto Jushi Kogyo Kabushiki Kaisha), 02 December, 2004 (02.12.04), Par. Nos. [0045], [0071], [0096] (Family: none) | 1-7 |
| A | JP 63-291001 A  (Asahi Chemical Industry Co., Ltd.), 28 November, 1988 (28.11.88), Page 2, upper right column, line 5 to lower left column, line 12 (Family: none) | 1-7 |
| A | JP 2003-50302 A  (Toppan Printing Co., Ltd.), 21 February, 2003 (21.02.03), Par. Nos. [0030], [0036] (Family: none) | 1-7 |

Form PCT/ISA/210 (continuation of second sheet) (April 2005)

**EP 1 892 569 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JEFFREY A. SHIMIZU et al.** Screens for Rear Projection LCD. *International Display Workshop (IDW '99,* 1999, 327-330